# EUROPÄISCHE PATENTSCHRIFT

(11) **EP 1 380 474 B1**
(45) Veröffentlichungstag und Bekanntmachung des Hinweises auf die Patenterteilung: **06.09.2006**
(21) Anmeldenummer: 03013992.7
(22) Anmeldetag: 20.06.2003
(51) Int. Cl.: B60R 21/01, B60R 21/34

(54) **Anordnung zur Ansteuerung von Rückhaltemitteln**
Control arrangement for restraining means
Dispositif de contrôle de moyens de retenue

(30) Priorität: 11.07.2002 DE 10231364
(43) Veröffentlichungstag der Anmeldung: 14.01.2004
(73) Patentinhaber: ROBERT BOSCH GMBH, 70442 Stuttgart (DE)
(72) Erfinder: Lich, Thomas, 71409 Schwaigkheim (DE); Recknagel, Rolf-Juergen, 07747 Jena (DE)

(56) Entgegenhaltungen:
- EP-A- 0 937 612
- EP-A- 0 995 639
- EP-A- 1 101 657
- WO-A-99/20491
- US-A- 5 835 007
- US-B1- 6 408 237

## Beschreibung

### Stand der Technik

Die Erfindung geht aus von einer Anordnung zur Ansteuerung von Rückhaltemitteln nach der Gattung des unabhängigen Patentanspruchs.

Aus EP 995 639 A2, die dem Oberbegriff des Anspruchs 1 entspricht, ist es bekannt, einen piezoelektrischen Sensor als Fußgängeraufprallsensor als primären Aufprallsensor zu verwenden, wobei zentral eingebaute Beschleunigungssensoren als Sehfilmsensoren verwendet werden. Aus EP 1 101 657 A2 ist es bekannt, einen Beschleunigungssensor als Crashsensor zu verwenden der mit einer Steuerauswerteeinrichtung verbunden ist. Die Crashinformation werden unter Zuhilfenahme einer Frequenzanalyse ausgewertet. Aus US 6,408,237 B1 ist die Verwendung eines Insassendetektionssystems und einer Umfeldsensorik bei einem Airbagsystem bekannt.

### Vorteile der Erfindung

Die erfindungsgemäße Anordnung zur Ansteuerung von Rückhaltemitteln mit den Merkmalen des unabhängigen Patentanspruchs hat den Vorteil, dass in den Auslösealgorithmus nicht nur Daten wenigstens eines Aufprallsensors eingehen, sondern auch ein Fußgängeraufprallsensor berücksichtigt wird. Dies hat den Vorteil, dass eine verbesserte Detektion des Aufprallorts, der Aufprallschwere und die Gefahr der Fehlauslösung, also des Misuse, minimiert werden. Dies liegt insbesondere daran, dass eine Fußgängersensorik als Fußgängeraufprallsensor meist großflächig an den Rändern des Fahrzeugs angeordnet ist. Herkömmliche Aufprallsensoren sind dagegen meist nur als Upfrontsensoren, als Seitenaufprallsensoren oder im zentralen Steuergerät nur an bestimmten Punkten im Fahrzeug angeordnet. Hier kann also der Crashtyp, d.h. der Aufprallort nur über vektorielle Messungen ermittelt werden. Es ist von Vorteil, dass der wenigstens eine Aufprallsensor als peripherer Sensor wie ein Upfrontsensor oder ein Seitenaufprallsensor ausgebildet ist. Insgesamt verbessert dagegen die erfindungsgemäße Anordnung die Ansteuerung von Rückhaltemitteln wie Airbags oder Gurtstraffern.

Durch die in den abhängigen Ansprüchen angegebenen Maßnahmen und Weiterbildungen sind vorteilhafte Verbesserungen der im unabhängigen Patentanspruch angegebenen Anordnung zur Ansteuerung von Rückhaltemitteln möglich.

Besonders vorteilhaft ist, dass der Prozessor aus der Verknüpfung der Signale des Fußgängeraufprallsensors und des Aufprallsensors den Crashtyp und die Crashschwere für die Ansteuerung der Rückhaltemittel bestimmt. Damit kann bestimmt werden, welche Rückhaltemittel und in welcher Art diese eingesetzt werden müssen. Die Art bestimmt insbesondere die zeitliche Entwicklung der Rückhaltekraft, die auf die im Fahrzeug befindlichen Insassen zu ihrem Schütze ausgeübt werden soll. Handelt es sich um einen harten Crash, dann muss die Rückhaltekraft auch entsprechend schnell auf die Insassen ausgeübt werden. Liegt nur ein weicher Crash vor, braucht die Kraftentfaltung beispielsweise eines Airbags nicht so stark zu sein.

Weiterhin ist es von Vorteil, dass der Prozessor bei der Ansteuerung der Rückhaltemittel zusätzlich Signale von Insassensensoren und/oder Precrashsensoren berücksichtigt. Dies ermöglicht, dass nur solche Rückhaltemittel eingesetzt werden, die auch wirklich Insassen schützen und nicht nur einen leeren Sitzplatz und bzw. bei einer gefährlichen Sitzposition des Insassen einen Einsatz der Rückhaltemittel verhindern oder zumindest stark abmildern. Signale von einem Precrashsensor ermöglichen insbesondere die zeitgemäße Ansteuerung von Rückhaltemitteln und den Einsatz von so genannten reversiblen Rückhaltemitteln, wie es reversible Gurtstraffer sind oder auch eine ausfahrbare Stoßstange. Weiterhin ist es von Vorteil, dass der wenigstens eine Fußgängeraufprallsensor in der Front und/oder in der Heckstoßstange angeordnet sein kann. Dies ermöglicht für Front- bzw. Offsetcrashes eine örtlich genau aufgelöste Detektion des Aufprallortes. Solch ein Fußgängeraufprallsensor erstreckt sich nämlich meist über die gesamte Breite der Stoßstange oder zumindest über einen großen Teil dieser Stoßstange. Weiterhin ist es möglich, dass der Fußgängeraufprallsensor auch an den Seiten des Fahrzeugs, beispielsweise in der Zierleiste, großflächig angeordnet ist. Dies ermöglicht ebenso für Seitencrashes im Front- und im Heckbereich eine örtlich genaue aufgelöste großflächige Detektion des Aufprallorts.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Anordnung und
- Figur 2: ein weiteres Blockschaltbild der erfindungsgemäßen Anordnung.

### Beschreibung

Im Bereich des Fußgängerschutzes existieren derzeit sehr viele Ideen im Bereich der Sensierung als auch der Aktuatorik. Hauptsächlich werden Stoßstangensensoren zur Fußgängeraufprallerkennung vorgeschlagen. Hierbei kommen Kraftsensoren oder Verformungssensoren zum Einsatz, die sich über die gesamte Breite des Fahrzeugs in der Stoßstange erstrecken. Beispiele für solche Kraftsensoren sind Piezofolien, Dehnmess-Streifen, Lichtleitersensoren oder Sensoren aus Komposit. Bei den Verformungssensoren handelt es sich teilweise um Lichtleiter oder einfache Schalter. Zur Erkennung des Aufprallortes werden mitunter mehrere Sensoren verwendet. Für den eigentlichen Schutz werden im wesentlichen Airbagsysteme in den Motorraum integriert oder aber die Motorhaube wird angehoben, um den Aufprall der Person, die am Aufprall beteiligt ist, entgegen zu wirken.

Airbagsteuergeräte, die einen Beschleunigungssensor innerhalb des Steuergeräts sowie gegebenenfalls zusätzliche ausgelagerte Sensoren wie Upfrontsensoren oder periphere Sensoren aufweisen, liefern bereits sehr gute Auslösezeiten im Falle eines Unfalls. Erfindungsgemäß wird nun vorgeschlagen, die Detektion des Aufprallortes und der Aufprallschwere dadurch zu verbessern, dass zusätzlich das Signal von der Fußgängersensorik für die Ansteuerung der Rückhaltemittel verwendet wird. Dies ermöglicht darüber hinaus eine höhere Redundanz bzw. Plausibilität für den Einsatz dieser Rückhaltemittel.

Kern der Erfindung ist allgemein die Verarbeitung der Information der Fußgängersensorik im zentralen Steuergerät zur Auslösung von Rückhaltemitteln. Hierbei können neben dem Airbagzentralsteuergerät auch andere Steuergeräte in Betracht gezogen werden, wie zum Beispiel die Steuergeräte für die Innenraumsensierung. Vorteil hierbei ist, dass die Fußgängersensorik in der Regel über den kompletten Frontbereich ausgelegt wird, so dass die korrekte Erfassung des Unfalleinschlags, also ob es sich um einen Offsetcrash handelt oder eventuell einen Frontcrash, sofort gezielt abgeleitet werden kann. Konkret kann also der Crashtyp eindeutiger bestimmt werden. Ein weiterer Vorteil ist die eindeutigere Erfassung der Crashschwere. In Abhängigkeit von der Geschwindigkeit ergibt sich bei der Auswertung des Sensorsignals eine entsprechende Information über die Deformation des Fahrzeugs in diesem Bereich. Hieraus kann die Crashschwere neben dem Beschleunigungssignal besser ermittelt werden. Es liegt also eine zusätzliche Gewinnung von Informationen über den Ablauf des Unfalls vor. Dieses Verfahren kann ebenso für eine Seitencrashsensierung eingesetzt werden.

Die so gewonnenen Informationen können im Airbagalgorithmus entsprechend berücksichtigt werden und tragen entscheidend zur Auslösestrategie bei. Weiterhin dient dieses Signal als Plausibilitätssignal im Bereich des so genannten Misuse, also des falschen Auslösefalls. Falls ein Frontaufprall vom Algorithmus detektiert werden sollte, so müssen ebenfalls die Fußgängerschutzsensoren einen Einschlag detektieren. Dies kann im Fall von einem Unterfahren von LKW einen bedeutenden Zeitvorteil erbringen , da hier die Stoßstange zuerst einen Kontakt erfährt, bevor das zentrale Steuergerät ein ausreichendes Signal erkennt. Es ist also eine Verbesserung der Robustheit gegenüber Beschleunigungssensoren wie Upfrontsensorik und Zentralsteuergerät vorhanden. Bei der Verwendung einer Hecksensorik in der Stoßstange kann diese Information ebenfalls im Fall eines Heckcrashes analoge Informationen liefern .

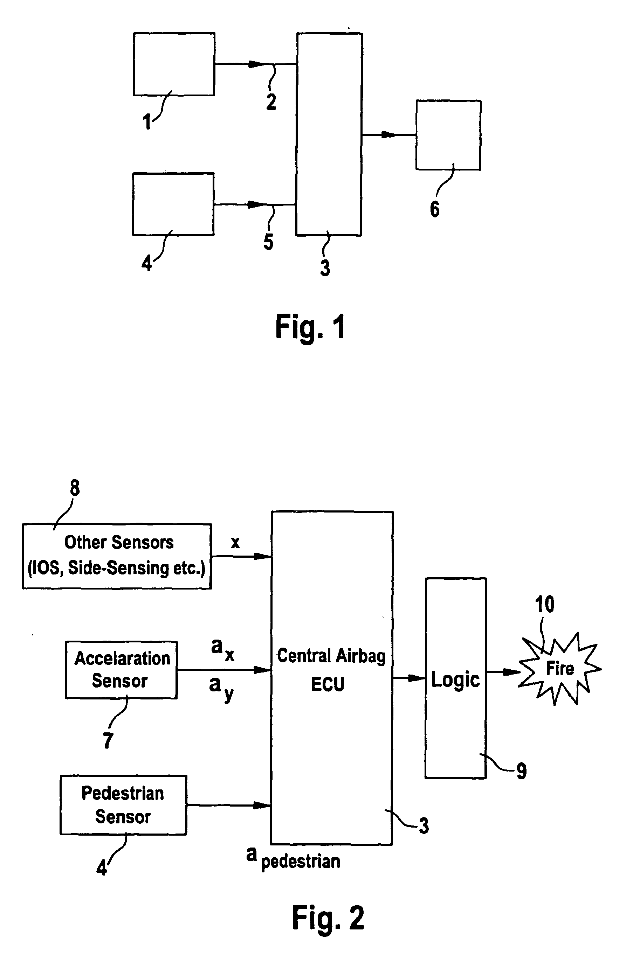

Figur 1 zeigt als Blockschaltbild die erfindungsgemäße Anordnung. Ein Aufprallsensor 1 ist über eine Leitung 2 mit einem Steuergerät 3 verbunden, in dem ein Prozessor zur Auswertung der Sensorsignale angeordnet ist. Über einen zweiten Dateneingang erhält das Steuergerät 3 von einem Fußgängeraufprallsensor 4 über eine Leitung 5 Signale. Über einen Datenausgang ist das Steuergerät 3 mit Rückhaltemitteln 6 verbunden.

Beispielhaft ist hier lediglich ein Aufprallsensor 1 dargestellt. Es ist möglich, dass mehr als dieser eine Aufprallsensor 1 vorhanden sind. Alternativ ist es möglich, dass der Aufprallsensor zusätzlich oder anstatt peripher angeordnet ist, d.h. entweder als Upfrontsensor unter der Motorhaube oder als Seitenaufprallsensor in der A-, B- oder C-Säule bzw. dem Türschweller bzw. der Tür oder einem Seitenteil selbst. Als Aufprallsensor kann insbesondere ein Beschleunigungssensor verwendet werden. Es ist alternativ oder zusätzlich möglich, dass auch Verformungssensoren eingesetzt werden. Zu solchen Verformungssensoren gehören Piezosensoren oder Lichtleitersensoren oder auch indirekte Verformungssensoren wie Temperatur- oder Drucksensoren, die auf einen adiabatischen Druck bzw. Temperaturanstieg, der durch einen Aufprall hervorgerufen wird, reagieren.

Die Leitung 2 kann hier als eine Zweidrahtleitung ausgebildet sein, die lediglich die undirektionale Übertragung von Daten vom Aufprallsensor 1 zum Steuergerät 3 ermöglicht. Dabei wird vorteilhafter Weise über diese Leitung vom Steuergerät 3 zum Aufprallsensor 1 über einen Gleichstrom eine Energieversorgung des Aufprallsensors 1 erreicht. Dieser Gleichstrom wird dann durch den Aufprallsensor 1 moduliert. Es ist jedoch auch möglich, dass Spannungsimpulse moduliert werden und dass die Energieversorgung separat von der Übertragungsleitung 2 ausgebildet ist. Auch eine bidirektionale Übertragung zwischen dem Aufprallsensor 1 und dem Steuergerät 3 ist möglich. Weiterhin ist es möglich, dass auch eine Busleitung zwischen dem Aufprallsensor 1 und dem Steuergerät 3 verwendet wird, wobei dann beide jeweils Kontroller zur Buskommunikation aufweisen. An einem solchen Bus können auch mehr als ein Aufprallsensor angeschlossen sein. Dies gilt auch für die Leitung 5, die den Fußgängeraufprallsensor 4 mit dem Steuergerät 3 verbindet. Die Leitungen 2 und 5 sind hier elektrisch ausgeführt. Es ist jedoch alternativ möglich, diese optisch oder als Funkübertragungsstrecke auszubilden.

Als ein Aufprallsensor 1 kommt hier insbesondere ein Beschleunigungssensor in Betracht. Dieser kann hier mikromechanisch ausgebildet sein. Es ist alternativ möglich, ihn auch als Schalter oder als ein anderes Feder-Masse-System auszubilden. Der Fußgängeraufprallsensor 4 kann, wie oben dargestellt, als Piezofolie, Dehnmess-Streifen, Lichtleitersensor oder ein Sensor aus Komposit ausgebildet sein. Es ist auch möglich, leitfähigen Schaumstoff zu verwenden. Wie oben dargestellt, sind die Fußgängeraufprallsensoren 4, hier ist beispielhaft nur einer dargestellt, es können auch mehr als einer verwendet werden, vorzugsweise in der Frontstoßstange angeordnet. Es ist alternativ möglich oder zusätzlich, auch in der Heckstoßstange oder in den Seiten des Fahrzeugs, beispielsweise in der Zierleiste, solche Aufprallsensoren anzuordnen. Das Steuergerät 3 weist mit einem Prozessor, beispielsweise einem Mikrokontroller, Mittel zur Auswertung der Signale auf. Das Steuergerät 3 steuert dann in Abhängigkeit von der Auswertung dieser Sensorsignale in einem Auslösealgorithmus die Rückhaltemittel 6 an. Die Rückhaltemittel 6 können hier auch über einen Bus mit dem Steuergerät 3 verbunden sein oder eben über Zweidrahtleitungen. Bei den Rückhaltemitteln 6 handelt es sich üblicherweise um Airbags oder Gurtstraffer, die auch in Stufen auslösbar sind. Damit können solche Rückhaltemittel insbesondere adaptiv eingesetzt werden, d.h. in Abhängigkeit von der Crashschwere und dem Insassen, der zu schützen ist. Das Gewicht des Insassen bestimmt insbesondere, welche Rückhaltemittel verwendet werden und wie und ob Rückhaltemittel eingesetzt werden sollen.

Das Steuergerät 3 verwendet nun beide Signale, die des Aufprallsensors 1 und des Fußgängeraufprallsensors 4 zur Berechnung des Auslösealgorithmus. Nur wenn beide einen Aufprall anzeigen, wird das Rückhaltemittel 6 angesteuert. Weiterhin ermöglichen die Signale der Sensoren 1 und 4 eine bessere Bestimmung des Aufprallortes, da sich insbesondere der Fußgängersensor 4 über die gesamte Front des Fahrzeugs erstreckt und auch, wie eben dargestellt, über die Crashschwere.

Figur 2 zeigt ein weiteres Blockschaltbild der erfindungsgemäßen Vorrichtung. Hier sind an das Steuergerät 3 der Fußgängeraufprallsensor 4, ein Beschleunigungssensor 7 mit Empfindlichkeit in und quer zur Fahrrichtung und weitere Sensoren 8 angeschlossen, wobei die weiteren Sensoren 8 Seitenaufprallsensoren und insbesondere Insassensensoren und weiterhin Precrashsensoren darstellen können. Das Steuergerät 3 verarbeitet alle diese Informationen im Auslösealgorithmus, um über die Logik 9 dann die entsprechenden Rückhaltemittel 10 auszulösen. Als Precrashsensoren können insbesondere Ultraschallsensoren und/oder Videosensoren und/oder Radarsensoren verwendet werden. Auch weitere Daten wie eine Kommunikation zwischen Fahrzeugen, können hier verwendet werden.

## Patentansprüche

1. Anordnung zur Ansteuerung von Rückhaltemitteln (6, 10) mit wenigstens einem Aufprallsensor (1, 7) und wenigstens einem Fußgängeraufprallsensor (4), die jeweils ein Signal an einen Prozessor (3) übertragen, der derart konfiguriert ist, dass der Prozessor (3) in Abhängigkeit von einer Verknüpfung der Signale die Rückhaltemittel (6, 10) ansteuert, **dadurch gekennzeichnet, dass** der wenigstens eine Aufprallsensor (1, 7) als peripherer Beschleunigungssensor ausgebildet ist und dass der Prozessor (3) im zentralen Steuergerät zur Auslösung von Rückhaltemitteln angeordnet ist, wobei jeweils zwischen dem wenigstens einen Aufprallsensor und dem Steuergerät (3) und zwischen dem Fußgängeraufprallsensor (4) und dem Steuergerät eine elektrische Leitung (2, 5) jeweils vorgesehen ist, über die lediglich eine unidirektionale Übertragung von Daten zum Steuergerät (3) vorgesehen ist.

2. Anordnung nach Anspruch 1, **dadurch gekennzeichnet, dass** der Prozessor (3) aus der Verknüpfung einen Crashtyp und eine Crashschwere für die Ansteuerung der Rückhaltemittel (6, 10) bestimmt.

## Claims

1. Arrangement for controlling restraining means (6, 10), having at least one impact sensor (1, 7) and at least one pedestrian impact sensor (4) which each transmit a signal to a processor (3) which is configured in such a way that the processor (3) actuates the restraining means (6, 10) as a function of a logic combination of the signals, **characterized in that** the at least one impact sensor (1, 7) is embodied as a peripheral acceleration sensor, and **in that** the processor (3) is arranged in the central control unit for triggering restraining means, an electrical line (2, 5) via which merely a unidirectional transmission of data to the control unit (3) is provided being provided in each case between the at least one impact sensor and the control unit (3) and between the pedestrian impact sensor (4) and the control unit.

2. Arrangement according to Claim 1, **characterized in that** the processor (3) determines a type of crash and a severity of crash for the actuation of the restraining means (6, 10) from the logic operation.

## Revendications

1. Dispositif de commande de moyens de retenue (6, 10) avec au moins un détecteur de choc (1, 7) et au moins un détecteur de collision de piéton (4), qui transmettent chacun à un processeur (3), un signal configuré pour que le processeur (3) commande les moyens de retenue (6, 10) en fonction d'une combinaison des signaux,
**caractérisé en ce que**
l'au moins un détecteur de choc (1, 7) est un capteur d'accélération périphérique, et le processeur (3) est disposé dans l'appareil de commande central pour le déclenchement de moyens de retenue, avec entre le détecteur de choc et l'appareil de commande (3) et entre le détecteur decollision de piéton (4) et l'appareil de commande une ligne électrique (2, 5), prévue uniquement pour une transmission unidirectionnelle de données vers l'appareil de commande (3).

2. Dispositif selon la revendication 1,
**caractérisé en ce que**
à partir de la combinaison le processeur (3) détermine le type de collision et la gravité de la collision pour la commande les moyens de retenue (6, 10).
